**Europäisches Patentamt**

**European Patent Office**

**Office européen des brevets**

(19)

(11) **EP 1 143 238 A2**

(12) **EUROPÄISCHE PATENTANMELDUNG**

(43) Veröffentlichungstag:
    **10.10.2001 Patentblatt 2001/41**

(51) Int Cl.[7]: **G01N 27/22**

(21) Anmeldenummer: **01105264.4**

(22) Anmeldetag: **05.03.2001**

(84) Benannte Vertragsstaaten:
    **AT BE CH CY DE DK ES FI FR GB GR IE IT LI LU
    MC NL PT SE TR**
    Benannte Erstreckungsstaaten:
    **AL LT LV MK RO SI**

(30) Priorität: **07.04.2000 DE 10017338**

(71) Anmelder: **TMT Tribologiemesstechnik GmbH
    76187 Karlsruhe (DE)**

(72) Erfinder:
    • **Hampel, Tobias, Dipl-Ing. (FH)
      76199 Karlsruhe (DE)**
    • **Viehweg, Frank, Dipl.-Physiker
      76646 Bruchsal (DE)**

(74) Vertreter: **Liesegang, Roland, Dr.-Ing.
    FORRESTER & BOEHMERT
    Pettenkoferstrasse 20-22
    80336 München (DE)**

(54) **Verfahren und Vorrichtung zum Bestimmen des Mischungsverhältnisses zweier Stoffe in einem Stoffgemisch**

(57) Ein kapazitives Verfahren zur Bestimmung des Mischungsverhältnisses zweier Stoffe in einem Stoffgemisch zeichnet sich dadurch aus, daß die Dielektrizitätszahlen ($\varepsilon_{rF}$, $\varepsilon_{rG}$) der beiden Stoffe nacheinander ermittelt werden, daß die Dielektrizitätszahl ($\varepsilon_r$) des Stoffgemisches ermittelt wird, und daß daraus der volumetrische Gehalt ($Q_G$) eines der beiden Stoffe in dem Stoffgemisch aus der Gleichung

$$Q_G = \frac{(\varepsilon_r - \varepsilon_{rF})}{(\varepsilon_{rG} - \varepsilon_{rF})} \, x100(\%)$$

errechnet wird.

**EP 1 143 238 A2**

**Beschreibung**

Die Erfindung betrifft ein Verfahren und eine Vorrichtung zum Bestimmen des Mischungsverhältnisses zweier Stoffe in einem Stoffgemisch.

Die Kenntnis des Mischungsverhältnisses zweier Stoffe ist in vielen Industriezweigen von großer Bedeutung. Beispielhaft seien die Motorenentwicklung in der Kraftfahrzeugindustrie, die Erdölforschung, die chemische Industrie, die Textil- und Lebensmittelindustrie sowie die Farben- und Lackindustrie genannt.

Die Stoffe können grundsätzlich fest, flüssig oder gasförmig sein. Von besonderer praktischer Bedeutung ist jedoch ein fließfähiges Stoffgemisch, insbesondere ein Stoffgemisch aus einem Gas und einer Flüssigkeit.

So hängt die Funktionsfähigkeit von Maschinen und deren Komponenten oft von den Zuständen und Eigenschaften der eingesetzten Schmier- und Hydraulikflüssigkeiten ab. Physikalische Eigenschaften wie die Wärmeleitfähigkeit oder Kompressibilität des Mediums sind von wesentlicher Bedeutung für Funktion und Lebensdauer der betreffenden Maschinen oder Maschinenteile. In den Flüssigkeiten dispergierte Gase, wie Umgebungsluft, können solche und andere physikalische Eigenschaften in erheblichem Maße verändern und daher zu Betriebsstörungen führen.

Die Kenntnis des Gasgehaltes einer Flüssigkeit, d. h. des Anteils an dispergierten Gasen in der Flüssigkeit, ermöglicht es, solchen Betriebsstörungen durch Änderungs- und Anpassungsmaßnahmen an der Maschine oder an der betreffenden Flüssigkeit vorzubeugen. Hierdurch können schon bei der Entwicklung gezielt Optimierungsmaßnahmen geschaffen werden.

Bei der Entwicklung von Verbrennungsmotoren für Kraftfahrzeuge wird der Gehalt an dispergiertem Gas in der Schmierflüssigkeit durch die physikalischen Eigenschaften der Schmierflüssigkeit und des Gases, die konstruktiven Merkmale und die Betriebsbedingungen (Drehzahl, Druck und Temperatur) sowie den Füllstand und die Montagelage der Maschine beeinflußt. Durch ständiges Ermitteln des Gasgehaltes können Schwachstellen frühzeitig erkannt, Kosten gesenkt und ernsthafte Beeinträchtigungen des Betriebes vermieden werden.

Derzeit werden zwei Verfahren zum Ermitteln des volumetrischen Anteiles an dispergiertem Gas in einer Flüssigkeit praktiziert.

Das erste bekannte Verfahren ist die sogenannte Ablaß-Methode. Dabei wird das System, z. B. eine Brennkraftmaschine, die mit einem Schmiermittel betrieben wird, zunächst in einen gewünschten Zustand gebracht, der beispielsweise durch Temperatur, Druck oder Laufzeit der Maschine charakterisiert sein kann. Nach Erreichen dieses Zustandes wird eine vorbestimmte Menge der zu untersuchenden Flüssigkeit in einen Meßzylinder abgelassen, worauf das Volumen und die Temperatur der abgelassenen Probe bestimmt werden. Das abgelassene Volumen enthält dispergiertes Gas und Flüssigkeit in unbekanntem Mischungsverhältnis. Nachfolgend wird die abgelassene Probe für eine bestimmte Zeitdauer so lange stehengelassen, bis die Flüssigkeit entgast, d. h. dispergiertes Gas aus der Flüssigkeit eliminiert ist. Nach Ablauf dieser Zeitdauer wird das verbleibende Flüssigkeitsvolumen bei der dann erneut gemessenen, veränderten Temperatur bestimmt. Im Idealfall entspricht das verbleibende Flüssigkeitsvolumen dem Flüssigkeitsvolumen ohne Gas. Aus dem Verhältnis des anfänglichen Volumens und des entgasten Volumens läßt sich dann der Gasgehalt für den betreffenden Zustand berechnen.

Dieses bekannte Verfahren ist kosten- und zeitaufwendig und außerdem ungenau: bis das anfängliche Volumen und die anfängliche Temperatur bestimmt sind, hat sich das Stoffgemisch gegenüber demjenigen in der Maschine verändert. Die Entgasungszeit variiert bei verschiedenen Flüssigkeiten, so daß eine Entgasungszeit, bis zu der sämtliches dispergiertes Gas aus der Flüssigkeit entfernt ist, nicht präzise genug vorgewählt werden kann. Bis zum Erhalt eines Meßwertes für den Gasgehalt in der Praxis mehrere Stunden.

Ein anderes Verfahren zur Bestimmung des Anteils dispergierten Gases in Flüssigkeit ist die radioaktive Methode, die nach dem Prinzip der γ-Strahlen-Absorptionsmethode arbeitet. Dabei wird eine γ-Strahlenquelle in einer Bleiabschirmung eingesetzt, welche die Ausbreitung der γ-Strahlen nur in einem Kanal zuläßt. Am Ende dieses Kanales befindet sich ein Strahlungsdetektor. In dem Kanal ist die von der zu messenden Flüssigkeit durchströmte Meßstrecke zwischen Strahlenquelle und Strahlungsdetektor installiert. Die Flüssigkeit absorbiert die Strahlung um so stärker, je größer die Dichte der Flüssigkeit ist, also je weniger Gas in der Flüssigkeit dispergiert ist. Die vom Strahlungsdetektor aufgenommene Strahlungsintensität variiert somit abhängig vom Gasgehalt in der zu untersuchenden Flüssigkeit.

Abgesehen davon, daß jegliches Radioaktivität einsetzendes Verfahren als gefährlich eingestuft und deshalb ungern angewendet wird, ist die radioaktive Meßmethode mit hohem Kostenaufwand verbunden. Die Detektion radioaktiver Strahlung ist sehr komplex und äußerst empfindlich gegenüber äußeren Störeinflüssen wie Temperatur, EMV. Ferner ist das Verfahren wenig flexibel, weil eine Abwandlung des Meßkopfes aufgrund der Notwendigkeit, einen dicken Bleimantel einzusetzen, stark eingeschränkt ist.

Der Erfindung liegt die Aufgabe zugrunde, ein Verfahren und eine Vorrichtung zu schaffen, mit der sich das Mischungsverhältnis zweier Stoffe in einem Stoffgemisch, insbesondere der volumetrische Anteil eines Gases in einer Flüssigkeit, mit geringem Aufwand und ohne gesundheitliche Risiken schnell und genau ermitteln läßt.

Zur Lösung dieser Aufgabe dient ein Verfahren nach Anspruch 1 und eine Vorrichtung nach Anspruch 10.

Vorteilhafte Weiterbildungen sind in den Unteransprüchen unter Schutz gestellt.

Das Verfahren nach der Erfindung sieht das Einbringen zunächst der beiden Stoffe getrennt voneinander und dann des Stoffgemisches in eine Meßkammer zwischen den Elektroden eines Kondensators und das Messen der entsprechenden Kapazitäten und anschließendes rechnerisches Ermitteln des betreffenden Stoffanteils aus der Gleichung

$$Q_G = \frac{(\varepsilon_r - \varepsilon_{rF})}{(\varepsilon_{rG} - \varepsilon_{rF})} \, x100(\%) \qquad (1)$$

vor. In dieser Gleichung bedeuten $\varepsilon_r$ die Dielektrizitätszahl des Stoffgemisches und $\varepsilon_{rG}$, $\varepsilon_{rF}$ die Dielektrizitätszahlen der beiden Stoffe im Stoffgemisch.

Die Dielektrizitätszahl $\varepsilon_r$ ist eine mit dem Temperatur veränderliche Stoffgröße. Die Kapazität C eines Kondensators ist der Dielektrizitätszahl $\varepsilon_r$ des zwischen seinen Elektroden befindlichen Dielektrikums gemäß der Gleichung

$$C = \varepsilon_o \cdot \varepsilon_r \cdot b \qquad (2)$$

direkt proportional, denn $\varepsilon_o$ ist eine für alle Stoffe gleich große elektrische Feldkonstante und b ist eine geometrische Konstante des Kondensators. Durch Auflösen der Gleichung (2) nach $\varepsilon_r$ und Einsetzen in Gleichung (1) läßt sich also aus den gemessenen Kapazitäten unmittelbar der Stoffgehalt eines interessierenden Stoffes im Stoffgemisch ermitteln.

Die Messung der Kapazitäten kann unter Einsatz klassischer Kapazitäts-Messverfahren, z.B. durch Messung des Scheinwiderstandes oder der Ladezeit des Kondensators erfolgen, in den jeweils einer der Stoffe oder des Stoffgemischs als Dielektrika eingebracht werden.

Bei einem fließfähigen Stoffgemisch kann die Messung kontinuierlich oder getaktet während einer vorgegebenen Betriebs- oder Prozeßdauer bei laufender Maschine oder Vorrichtung durchgeführt werden. Besteht das Stoffgemisch aus einem Gas oder einer Flüssigkeit, wird vorzugsweise der Gasanteil in der Flüssigkeit gemessen.

In der Praxis wird für eine bestimmte Anwendung vorteilhaft ein Kondensator mit konstanten geometrischen Daten, z. B. ein Plattenkondensator mit konstantem Elektrodenabstand und konstanter Plattenfläche, eingesetzt, wobei bevorzugt ist, wenn die Meßkammer zwischen den Elektroden durch einen Isolator gegenüber der Umgebung isoliert ist. Somit ist bei der Kapazitätsmessung die einzige Variante eine Veränderung des in die Meßkammer eingebrachten Stoffgemisches, insbesondere eine Veränderung des Verhältnisses der Stoffanteile in dem Stoffgemisch.

Da sich im Betrieb einer Anlage oder Maschine, welche mit dem Stoffgemisch arbeitet, auch die Temperatur des Stoffgemisches ändern kann und dies einen Einfluß auf die Dielektrizitätszahl hat, wird in Anwendungsfällen, bei dem die Temperatur des Stoffgemisches veränderlich ist, eine Temperaturkompensation dadurch vorgesehen, daß die Temperaturen des Stoffgemisches laufend gemessen und die Dielektrizitätszahlen der Flüssigkeit zur Kalibrierung mehrfach jeweils bei typischen Temperaturen ermittelt werden, nachdem diese Temperaturen durch Homogenisieren in der Meßkammer feststehen.

Mit Hilfe der hierbei gewonnenen Kapazitätsmeßwerte bei verschiedenen Temperaturen kann die erwähnte Temperaturkompensation durchgeführt werden.

Ein erfindungsgemäßes Verfahren mit kapazitiver Messung und rechnerischer Auswertung zum Ermitteln eines Stoffgehaltes in einem Zweistoff-Gemisch, insbesondere eines Gasgehaltes in einem Schmiermittel, hat die folgenden Vorteile:

Die Messung ist **einfach**, weil im laufenden System, z.B. bei laufendem Motor, gemessen wird, wobei der Stoffgehalt (Gasgehalt) in allen Betriebsphasen ohne Unterbrechung des laufenden Systems (Motors) ermittelt wird.

Das Verfahren ist **schnell**, weil der volumetrische Stoffgehalt (Gasgehalt) zeitgleich mit der Messung ermittelt wird und somit eine Online-Korrelation zwischen dem Stoffgehalt (Gasgehalt) und anderen Prozeß- und Meßgrößen gegeben ist.

Das Verfahren ist **ungefährlich**, weil weder ein heißes Stoffgemisch (Schmiermittel) bei Temperaturen oberhalb von 100°C abgelassen zu werden braucht noch radioaktive Strahler oder andere gefährliche Stoffe verwendet werden, was den Einsatz des Verfahrens und der Vorrichtung in vielen Wirtschafts- und Industriezweigen, z.B. in der Lebensmittelindustrie, ohne weiteres zuläßt.

Das Verfahren ist **kostengünstig**, weil im Gegensatz zu den bekannten Verfahren keine aufwendigen Sicherheitsvorkehrungen zu treffen sind und weil, insbesondere im Vergleich zu der radioaktiven Methode, die Kosten für den Meß- und Auswerteteil deutlich niedriger liegen.

Das Verfahren ist **flexibel**, weil der Meßteil sehr variabel gestaltet werden und somit für die verschiedensten Anwendungen angepaßt werden kann, wobei die Messung der Anteile zweier verschiedener Stoffe im weitesten Sinne möglich ist, weil sich diese Stoffe nur hinsichtlich der Dielektrizitätszahlen unterscheiden müssen (z.B. Emulsionen zweier verschiedener Flüssigkeiten).

Das Verfahren ist **genau**, weil kapazitive Standardmeßverfahren einsetzbar sind, welche eine hochpräzises Messen der Kapazität von Kondensatoren mit beliebigen Dielektrika ermöglicht.

Somit ermöglichen ein Verfahren und eine Vorrichtung nach der Erfindung ein schnelles Ermitteln des Mischungsverhältnisses zweier Stoffe in einem Stoffgemisch, beispielsweise des Gasgehaltes in einer Schmierflüssigkeit für eine Brennkraftmaschine bei laufender Maschine, mit hoher Genauigkeit bei kleinem Aufwand und ohne Gefährdung durch radioaktive Strahlung.

Die Erfindung ist im folgenden anhand schematischer Zeichnungen an einem Ausführungsbeispiel näher erläutert. Es zeigen:

Fig. 1    eine Schemadarstellung eines Plattenkondensators gemäß der Erfindung mit zwischen den Platten angeordneter Meßkammer;

Fig. 2    eine Schemadarstellung des Kondensators nach Fig. 1 mit weiteren Einzelheiten;

Fig. 3    das Schema einer Vorrichtung gemäß der Erfindung mit Meß- und Auswerteteil; und

Fig. 4    ein Blockschaltbild, aus dem die Einschaltung der Vorrichtung nach Fig. 3 wahlweise in zwei Flüssigkeitskreisläufe je mit einem Temperierbad und mit einer Maschine oder Anlage ersichtlich ist.

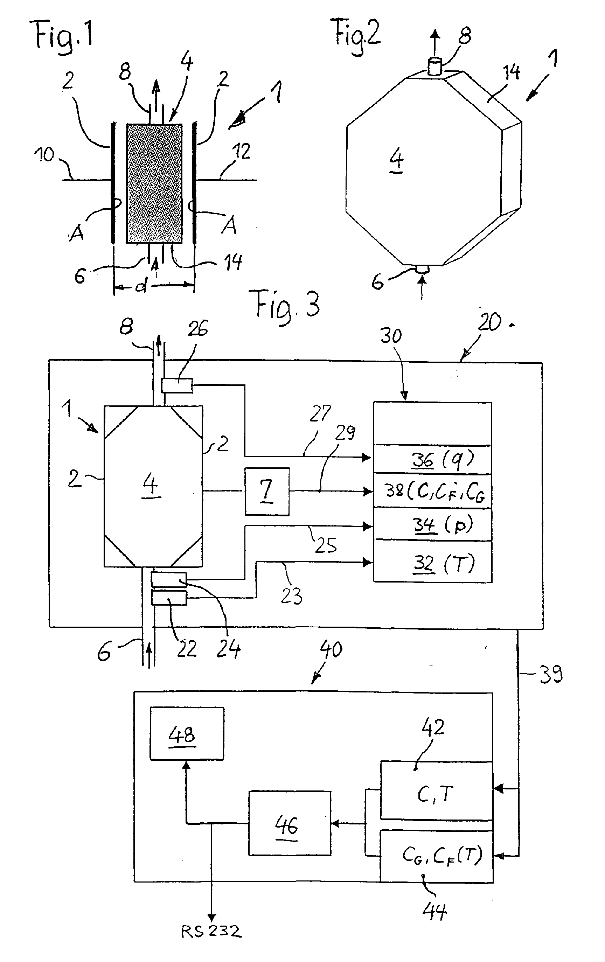

In Fig. 1 sind mit der Bezugszahl 2 die Platten eines Kondensators 1 bezeichnet. Die Platten bestehen wie üblich aus Metall und haben eine konstante Fläche A. Sie sind in einem festen Abstand d angeordnet. Zwischen den Platten 2 ist eine isolierte Meßkammer 4 vorgesehen, in welche über einen Einlaß 6 ein Stoffgemisch, wie ein Gas-Flüssigkeits-Gemisch eingebracht werden kann. Über einen Auslaß 8 ist dieses Stoffgemisch aus der Meßkammer 4 wieder entfernbar. Über die elektrischen Zuleitungen 10 und 12 ist wie üblich eine Wechselspannung an die Platten 2 des Kondensators anlegbar. Mit 7 ist eine Meßvorrichtung herkömmlicher Bauart zum Messen der Kapazitäten C, $C_F$, $C_G$ mit dem Stoffgemisch und den beiden getrennten Stoffen bezeichnet.

Einlaß 6 und Auslaß 8 sind nur dann erforderlich, wenn das in die Meßkammer 4 einzubringende Stoffgemisch fließfähig ist, beispielsweise ein Gas-Flüssigkeits-Gemisch darstellt. In diesem Falle können mit dem Kondensator 1 die Kapazitäten mit den eingebrachten Stoffen oder Stoffgemischen auch kontinuierlich oder getaktet in strömendem Zustand vom Einlaß 6 über die Meßkammer 4 zum Auslaß 8 gemessen werden.

Fig. 2 zeigt ein Beispiel für eine körperlich ausgeführte Meßkammer 4 im Kondensator 1 gemäß Fig. 1 für diesen Fall, wobei Einlaß 6 und Auslaß 8 als Rohre dargestellt sind. Diese Rohre 6, 8 durchsetzen einen Isolator 14, welcher die Meßkammer 4 zwischen den Platten 2 einschließt, und schalten die Meßkammer 4 in einen Kreislauf für das Stoffgemisch ein, beispielsweise in den Strömungskreislauf eines Schmiermittels für einen Kraftfahrzeugmotor (nicht gezeigt), wobei dieses Schmiermittel ein Schmieröl als ersten Stoff und ein darin dispergiertes Gas als zweiten Stoff enthält.

Die Vorrichtung gemäß Fig. 3 umfaßt einen Meßteil 20 und einen Auswerteteil 40. Zum Meßteil 20 gehören der Kondensator 1 mit der Meßkammer 4 sowie Einlaß 6 und Auslaß 8. Im Einlaß 6 unmittelbar vor der Meßkammer 4 sind ein Drucksensor 22 und ein Temperatursensor 24 vorgesehen. Im Auslaß 8 ist ein Durchflußsensor 26 für das strömende Stoffgemisch vorgesehen. Diese Sensoren sind über Signalleitungen 23, 25, 27 mit einer Speicher- und Übertragungseinheit 30 für die verschiedenen Meßwerte mit entsprechenden Abteilen 32, 34, 36 für Temperatur T, Druck p und Durchfluß q verbunden. Über eine weitere Signalleitung 29 werden die jeweils gemessenen Kapazitäten in das Abteil 38 übertragen.

Der Auswerteteil 40 ist mit dem Meßteil 20 über eine Sammel-Signalleitung 39 verbunden, welche die Meßdaten für die Kapazität C des Kondensators mit dem Stoffgemisch als Dielektrikum sowie die Temperatur T zu einem ersten Empfangsteil 42 und für die vorher separat gemessenen Kapazitäten $C_G$, $C_F$(T) des Kondensators mit den beiden Stoffe, nämlich Öl und Gas als Dielektrikum, für Öl gemessen bei unterschiedlichen Temperaturen T, als Kalibrierdaten in den zweiten Empfangsteil 44 des Auswerteteils 40 übermittelt. Von den beiden Empfangsteilen 42, 44 werden diese Daten einem Rechenbaustein 46 zum Berechnen des Gehaltes eines der beiden Stoffe, z. B. Gas, in dem Stoffgemisch aus der Gleichung (1) weitergeleitet.

$$Q_G = \frac{(\varepsilon_r - \varepsilon_{rF})}{(\varepsilon_{rG} - \varepsilon_{rF})} \, x 100 (\%)$$

In einer Anzeige 48 lassen sich die gemessenen Stoffanteile visualisieren, beispielsweise in Absolutwerten und/oder als Verhältniswert, z.B. in Prozent der Stoffanteile. Die ermittelten Stoffanteil können auch einer Schnittstelle RS 232 zugeführt werden, um sie an andere Systeme weiterzuleiten.

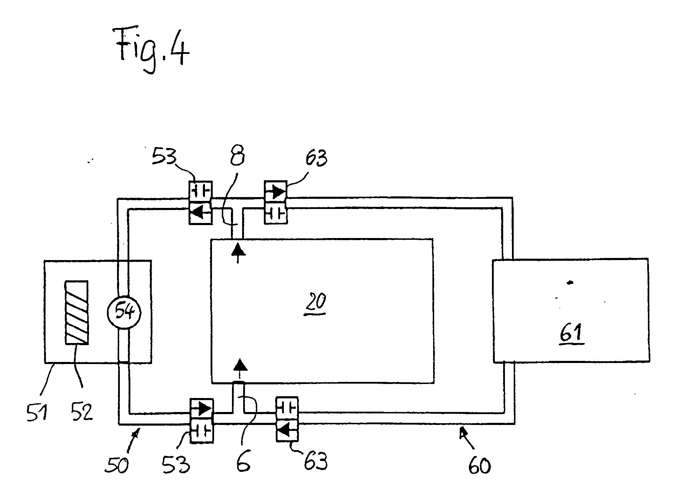

Fig. 4 zeigt den Meßteil 20 (der Auswerteteil 40 ist hier zur Vereinfachung nicht gezeichnet) über die Leitungen 6, 8 mit zwei Kreisläufen verbindbar, nämlich einem Temperierkreislauf 50 für den einen Stoff, hier eine Schmierflüssigkeit, und einem Maschinenkreislauf 60 für das Stoffgemisch, hier eine Schmierflüssigkeit mit darin dispergierter Luft. In den Temperierkreislauf 50 ist ein Temperierbad 51 mit einstellbarer Heizvorrichtung 52 für die eingespeiste Schmierflüssigkeit eingeschaltet. Die Schmierflüssigkeit wird durch eine Pumpe 54 umgewälzt. Der Maschinenkreislauf 60 enthält eine Maschine 61, wie einen Kraftfahrzeugmotor. Die beiden Kreisläufe 50, 60 sind wahlweise über Ventilpaare 53, 53 und 63, 63 mit dem Meßteil 20 verbindbar. So sind die Ventile 53, 53 geöffnet und die Ventile 63, 63 gesperrt, wenn die Kapazitäten $C_F$, $C_G$ der beiden Stoffe zur Kalibrierung separat voneinander gemessen werden sollen. Umgekehrt sind die Ventile 53, 53 gesperrt und die Ventile 63, 63 geöffnet, wenn die Kapazität C des Stoffgemisches bei laufender Maschine 61 gemessen werden soll.

Der Verfahrensablauf beim Ermitteln des Gasanteiles in einem Gas-Schmierölgemisch in einem Kraftfahrzeugmotor ist wie folgt:

(1) der Meßteil 20 wird an die Auswertestation 40 angeschlossen;

(2) in die Meßkammer 4 des Kondensators 1 wird das Gas (Umgebungsluft) des Gas-Schmierölgemisches separat eingefüllt, und die Kapazität C des Kondensators mit diesem Gas als Dielektrikum wird gemessen;

(3) an den Meßteil (20) wird der Temperierkreislauf 50 mit dem Temperierbad 51 angeschlossen;

(4) bei geöffneten Ventilen 53, 53 und gesperrten Ventilen 63, 63 wird die die Schmierflüssigkeit durch die Meßkammer 4 zirkuliert;

(5) die Schmierflüssigkeit wird bis auf eine Temperatur $T_1$ erwärmt, eine Homogenisierung dieser Temperatur abgewartet und die Kapazität $C_{F1}$ bei der Temperatur $T_1$ gemessen und gespeichert. Diese Vorgänge werden bei mehreren Temperaturen $T_2$ bis $T_n$ und der Messung der entsprechenden Kapazitäten $C_{F2}$ bis $C_{Fn}$ wiederholt;

(6) der Meßteil 20 wird durch Sperren der Ventile 53 und Öffnen der Ventile 63 aus dem Temperierkreis 50 aus- und in den Maschinenkreislauf eingeschaltet;

(7) Die Kapazität C des Kondensators mit der dispergierte Luft enthaltenden Schmierflüssigkeit als Dielektrikum wird bei laufender Maschine gemessen, und in der Auswertestation 40 wird in der beschriebenen Weise unter Verwendung sämtlicher Meßwerte der momentane Gasgehalt mit einer gewählten Aktualisierungsrate, beispielsweise einmal pro Sekunde, berechnet, in der Anzeige 48 visualisiert und/oder über die Schnittstelle RS 232 an ein anderes System übergeben.

Die Kalibrierungsschritte 2) und 5) können automatisch durchgeführt werden.

Die ermittelten Gasgehalte können zugleich mit anderen Prozeßgrößen über die gewählte Betriebsoder Prozeßdauer aufgenommen werden.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

**Patentansprüche**

1. Verfahren zum Bestimmen des Mischungsverhältnisses zweier Stoffe in einem Stoffgemisch, bei dem

a) die Dielektrizitätszahl ($\varepsilon_{rG}$) des ersten Stoffes ermittelt wird,
b) die Dielektrizitätszahl ($\varepsilon_{rF}$) des zweiten Stoffes ermittelt wird,
c) die Dielektrizitätszahl ($\varepsilon_r$) des Stoffgemisches ermittelt wird,
d) der Gehalt ($Q_G$) im Stoffgemisch eines der beiden Stoffe aus der Beziehung

$$Q_G = \frac{(\varepsilon_r - \varepsilon_{rF})}{(\varepsilon_{rG} - \varepsilon_{rF})} \, x100(\%)$$

errechnet wird.

2. Verfahren nach Anspruch 1, **dadurch gekennzeichnet, daß** der erste Stoff, der zweite Stoff und das Stoffgemisch nacheinander in den Raum (4) zwischen den Elektroden (2, 2) eines Kondensators (1) eingebracht und jeweils die Kapazitäten (C) gemessen werden und die zugehörigen Dielektrizitätszahlen ($\varepsilon_r$) aus der Gleichung

$$\varepsilon_r = C/\varepsilon_o \cdot b$$

mit $\varepsilon_o$ und b als vorgegebenen Konstanten errechnet werden.

3. Verfahren nach Anspruch 1 oder 2, **dadurch gekennzeichnet, daß** das Stoffgemisch fließfähig ist, **daß** der Kondensator (1) nach den Schritten a) und b) und vor dem Schritt c) in einen Stoffgemisch-Kreislauf (60) durch eine Maschine (61) oder Anlage eingeschaltet wird, **daß** das Stoffgemisch durch den Raum (4) zwischen den Elektroden (2, 2) hindurch transportiert wird und **daß** die Kapazität (C) des Kondensators mit dem Stoffgemisch als Dielektrikum kontinuierlich oder getaktet während einer vorgegebenen Betriebs- oder Prozeßdauer bei laufender Maschine oder Anlage gemessen wird.

4. Verfahren nach einem der Ansprüche 1 bis 3, **dadurch gekennzeichnet, daß** der erste Stoff eine Flüssigkeit und der zweite Stoff wahlweise ein Gas, eine Flüssigkeit oder ein fester Stoff ist.

**5.** Verfahren nach Anspruch 4, **dadurch gekennzeichnet, daß** im Schritt b) die Dielektrizitätszahl ($\epsilon_{rF}$) der Flüssigkeit mehrfach jeweils bei unterschiedlichen Temperaturen ermittelt wird, welche entsprechend maßgeblichen Prozeß- oder Betriebstemperaturen gewählt sind.

**6.** Verfahren nach Anspruch 5, **dadurch gekennzeichnet, daß** die Flüssigkeiten vor der jeweiligen Messung in Schritt b) nacheinander auf die gewünschte Temperatur gebracht und jeweils bei diesen Temperaturen homogenisiert werden und **daß** jeweils die Dielektrizitätszahlen der Flüssigkeiten in homogenisiertem Zustand ermittelt werden.

**7.** Verfahren nach einem der Ansprüche 1 bis 6, **dadurch gekennzeichnet, daß** die Ermittlung der Dielektrizitätszahl ($\epsilon_r$) des Stoffgemisches gemäß Schritt c) an dem in einer laufenden Brennkraftmaschine (61) zirkulierenden Schmiermittel vorgenommen wird, in welchem der erste Stoff eine Schmierflüssigkeit und der zweite Stoff ein Gas ist.

**8.** Vorrichtung zum Bestimmen des Mischungsverhältnisses zweier Stoffe in einem Stoffgemisch umfassend:

A) einen Kondensator (1), der in einem Raum zwischen zwei Elektroden (2) eine Meßkammer (4) aufweist,
B) einen Einlaß (6) für das Stoffgemisch in die Meßkammer,
C) einen Auslaß (8) für das Stoffgemisch aus der Meßkammer,
D) eine Messvorrichtung (7) zum Messen der Kapazitäten ($C_G$, $C_F$, C) des Kondensators (1) mit den jeweils gesondert in die Meßkammer (4) eingebrachten Stoffen und dem Stoffgemisch als Dielektrika,
E) einen Auswerteteil (40) mit einem Rechenbaustein (46), in dem der Gehalt ($Q_G$) eines der beiden Stoffe in dem Stoffgemisch aus der Gleichung

$$Q_G = \frac{(\epsilon_r - \epsilon_{rF})}{(\epsilon_{rG} - \epsilon_{rF})}\ x100(\%)$$

ermittelt wird.

**9.** Vorrichtung nach Anspruch 8, **dadurch gekennzeichnet, daß** die Meßvorrichtung (7) zum dynamischen Messen der Kapazitäten des Kondensators in bewegtem Zustand der Stoffe bzw. des Stoffgemisches ausgelegt ist.

**10.** Vorrichtung nach Anspruch 9, **dadurch gekennzeichnet, daß** ein Temperatursensor (22) zur Messung der Temperatur, ein Drucksensor (24) zur Messung des Druckes sowie im Auslaß (8) ein Durchflußsensor (26) zum Messen des Durchflusses des strömenden Stoffgemisches vorgesehen sind.

**11.** Vorrichtung nach einem der Ansprüche 8 bis 10, **dadurch gekennzeichnet, daß** die geometrischen Daten des Kondensators bezogen auf eine spezifische Anwendung konstant sind.

**12.** Vorrichtung nach einem der Ansprüche 8 bis 11, **dadurch gekennzeichnet, daß** die Meßkammer (4) durch einen Isolator (14) gegenüber der Umgebung isoliert ist.

**13.** Vorrichtung nach einem der Ansprüche 8 bis 12, **dadurch gekennzeichnet, daß** dem Meßteil (20) ein Temperierbad (51) mit einstellbarer Heizvorrichtung (52) zum Einstellen vorbestimmter Temperaturen in dem Temperierbad für die Messung der Kapazität des Kondensators bei den vorbestimmten Temperaturen vorgeschaltet ist.

Fig.1

Fig.2

Fig. 3

Fig.4